(19) **Europäisches Patentamt European Patent Office Office européen des brevets**

(11) **EP 4 756 675 A1**

(12) **EUROPEAN PATENT APPLICATION**

(43) Date of publication:
**10.06.2026 Bulletin 2026/24**

(51) International Patent Classification (IPC):
**G06N 3/0464** (2023.01) **G06N 3/063** (2023.01)

(21) Application number: **25219640.7**

(52) Cooperative Patent Classification (CPC):
**G06N 3/0464; G06N 3/063**

(22) Date of filing: **01.12.2025**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **06.12.2024 FI 20246430**

(71) Applicant: **Nokia Solutions and Networks Oy 02610 Espoo (FI)**

(72) Inventors:
- **GONG, Taesik Cambridge (GB)**
- **MIN, Chulhong Cambridge (GB)**

(74) Representative: **Bryers Intellectual Property Ltd Bristol & Bath Science Park Dirac Crescent, Emerson's Green Bristol BS16 7FR (GB)**

(54) **EFFICIENT UTILIZATION OF MACHINE LEARNING PROCESSING RESOURCES**

(57) There are provided measures for efficient utilization of machine learning processing resources. Such measures exemplarily comprise, for preparing, based on initial data, input data for an input layer of a machine learning model having said input layer, at least one inner layer, and an output layer, and being learned and/or deployed at processing hardware providing a plurality of processing channels, each processing channel comprising a dedicated processor and a dedicated memory range, wherein said initial data is arranged in a first array having a first dimension equal to or larger than 1, a second dimension equal to or larger than 1, and a third dimension equal to or larger than 1, wherein a data amount of each element of said first array is equal to a predetermined amount, if said predetermined amount multiplied with a size of said first dimension and a size of said second dimension exceeds a size of said dedicated memory range and if said third dimension is smaller than a number of said plurality of processing channels: partitioning said first array in said first dimension and said second dimension into a plurality of uniform sub-arrays, wherein a number of said plurality of sub-arrays is based on said dedicated memory range, performing, for each sub-array field index position of a plurality of selected sub-array field index positions, a down-sampling operation on said first array of said initial data, said down-sampling operation includes selecting, from each sub-array, a field at said sub-array field index position, and generating, for each index position in said third dimension, a second array including said elements corresponding to said selected fields and said index position in said third dimension, in an arrangement corresponding to an arrangement of said plurality of uniform sub-arrays, and assigning each of generated second arrays in order of generation to a respective processing channel of said plurality of processing channels as said input data.

Fig. 5

**Description**

Field

Various example embodiments relate to efficient utilization of machine learning processing resources. More specifically, various example embodiments exemplarily relate to measures (including methods, apparatuses and computer program products) for realizing efficient utilization of machine learning processing resources.

Background

The present specification generally relates to machine learning in particular on constrained processing resources.

Tiny machine learning (TinyML) is an active research field focused on developing and deploying machine learning models on extremely resource-constrained devices, such as microcontroller units (MCUs) and small Internet of Things (IoT) sensors.

Compared to cloud-based artificial intelligence (AI), TinyML on devices offers benefits in privacy preservation, low latency, and low cost.

While research efforts in TinyML, such as model compression techniques, have successfully reduced the size of AI models to fit into memory-constrained MCUs, the fundamental limitation in the processing capability of MCUs leads to long inference latency.

This limitation hinders the widespread adoption of on-device AI, especially for real-time applications.

Recent tiny AI accelerators revolutionized the TinyML field by dramatically boosting the model inference speed and leading a new phase of on-device AI.

To enable such acceleration, these tiny AI accelerators introduce several hardware optimization techniques.

They often feature multiple convolutional processors (e.g., 64 processors) and parallelize per-channel convolutional neural network (CNN) operations across these processors. For further optimization, the memory architecture allows each processor to have a dedicated memory instance, i.e., per-processor memory instance.

This design enables simultaneous memory access to multiple channels from different processors.

While these hardware-level optimizations bring significant performance improvements, these hardware-level optimizations also have several constraints at the expense of the optimizations.

Hence, the problem arises that recently revolutionizing tiny AI accelerators provide at least some of capabilities at the expense of several constraints which might demand further improvement.

Hence, there is a need to provide for efficient utilization of machine learning processing resources.

Summary

Various example embodiments aim at addressing at least part of the above issues and/or problems and drawbacks.

Various aspects of example embodiments are set out in the appended claims.

According to an exemplary aspect, there is provided an apparatus for preparing, based on initial data, input data for an input layer of a machine learning model having said input layer, at least one inner layer, and an output layer, and being learned and/or deployed at processing hardware providing a plurality of processing channels, each processing channel comprising a dedicated processor and a dedicated memory range, wherein said initial data is arranged in a first array having a first dimension equal to or larger than 1, a second dimension equal to or larger than 1, and a third dimension equal to or larger than 1, wherein a data amount of each element of said first array is equal to a predetermined amount, the apparatus comprising

at least one processor, and
at least one memory storing instructions that, when executed by the at least one processor, cause the apparatus at least to perform:
if said predetermined amount multiplied with a size of said first dimension and a size of said second dimension exceeds a size of said dedicated memory range and if said third dimension is smaller than a number of said plurality of processing channels:

partitioning said first array in said first dimension and said second dimension into a plurality of uniform sub-arrays, wherein a number of said plurality of sub-arrays is based on said dedicated memory range,
performing, for each sub-array field index position of a plurality of selected sub-array field index positions, a down-sampling operation on said first array of said initial data, said down-sampling operation includes:

selecting, from each sub-array, a field at said sub-array field index position, and
generating, for each index position in said third dimension, a second array including said elements corresponding to said selected fields and said index position in said third dimension, in an arrangement corresponding to an arrangement of said plurality of uniform sub-arrays, and

assigning each of generated second arrays in order of generation to a respective processing channel of said plurality of processing channels as said input data.

According to an exemplary aspect, there is provided an apparatus for preparing, based on initial data, input data for an input layer of a machine learning model having said input layer, at least one inner layer, and an output layer, and being learned and/or deployed at processing hardware providing a plurality of processing channels, each processing channel comprising a dedicated processor and a dedicated memory range, wherein said initial data is arranged in a first array having a first dimension equal to or larger than 1, a second dimension equal to or larger than 1, and a third dimension equal to or larger than 1, the apparatus comprising

at least one processor, and
at least one memory storing instructions that, when executed by the at least one processor, cause the apparatus at least to perform:

for each repetition of a plurality of repetitions:
down-sampling said initial data in said first dimension and said second dimension with a same sample rate among said plurality of repetitions and different sample offsets among said plurality of repetitions for each index position in said third dimension as second arrays, and
assigning each of said second arrays in order of said plurality of repetitions to a respective processing channel of said plurality of processing channels as said input data.

According to an exemplary aspect, there is provided a method for preparing, based on initial data, input data for an input layer of a machine learning model having said input layer, at least one inner layer, and an output layer, and being learned and/or deployed at processing hardware providing a plurality of processing channels, each processing channel comprising a dedicated processor and a dedicated memory range, wherein said initial data is arranged in a first array having a first dimension equal to or larger than 1, a second dimension equal to or larger than 1, and a third dimension equal to or larger than 1, wherein a data amount of each element of said first array is equal to a predetermined amount, the method comprising
if said predetermined amount multiplied with a size of said first dimension and a size of said second dimension exceeds a size of said dedicated memory range and if said third dimension is smaller than a number of said plurality of processing channels:

partitioning said first array in said first dimension and said second dimension into a plurality of uniform sub-arrays, wherein a number of said plurality of sub-arrays is based on said dedicated memory range,
performing, for each sub-array field index position of a plurality of selected sub-array field index positions, a down-sampling operation on said first array of said initial data, said down-sampling operation includes:

selecting, from each sub-array, a field at said sub-array field index position, and
generating, for each index position in said third dimension, a second array including said elements corresponding to said selected fields and said index position in said third dimension, in an arrangement corresponding to an arrangement of said plurality of uniform sub-arrays, and
assigning each of generated second arrays in order of generation to a respective processing channel of said plurality of processing channels as said input data.

According to an exemplary aspect, there is provided a method for preparing, based on initial data, input data for an input layer of a machine learning model having said input layer, at least one inner layer, and an output layer, and being learned and/or deployed at processing hardware providing a plurality of processing channels, each processing channel comprising a dedicated processor and a dedicated memory range, wherein said initial data is arranged in a first array having a first dimension equal to or larger than 1, a second dimension equal to or larger than 1, and a third dimension equal to or larger than 1, the method comprising

for each repetition of a plurality of repetitions:
down-sampling said initial data in said first dimension and said second dimension with a same sample rate among said plurality of repetitions and different sample offsets among said plurality of repetitions for each index position in said third dimension as second arrays, and

assigning each of said second arrays in order of said plurality of repetitions to a respective processing channel of said plurality of processing channels as said input data.

According to an exemplary aspect, there is provided an apparatus for preparing, based on initial data, input data for an input layer of a machine learning model having said input layer, at least one inner layer, and an output layer, and being learned and/or deployed at processing hardware providing a plurality of processing channels, each processing channel comprising a dedicated processor and a dedicated memory range, wherein said initial data is arranged in a first array having a first dimension equal to or larger than 1, a second dimension equal to or larger than 1, and a third dimension equal to or larger than 1, wherein a data amount of each element of said first array is equal to a predetermined amount, the apparatus comprising

partitioning means for, if said predetermined amount multiplied with a size of said first dimension and a size of said second dimension exceeds a size of said dedicated memory range and if said third dimension is smaller than a number of said plurality of processing channels, partitioning said first array in said first dimension and said second dimension into a plurality of uniform sub-arrays, wherein a number of said plurality of sub-arrays is based on said dedicated memory range,

performing means for, if said predetermined amount multiplied with a size of said first dimension and a size of said second dimension exceeds a size of said dedicated memory range and if said third dimension is smaller than a number of said plurality of processing channels, performing, for each sub-array field index position of a plurality of selected sub-array field index positions, a down-sampling operation on said first array of said initial data, said down-sampling operation includes:

selecting, from each sub-array, a field at said sub-array field index position, and

generating, for each index position in said third dimension, a second array including said elements corresponding to said selected fields and said index position in said third dimension, in an arrangement corresponding to an arrangement of said plurality of uniform sub-arrays, and

assigning means for, if said predetermined amount multiplied with a size of said first dimension and a size of said second dimension exceeds a size of said dedicated memory range and if said third dimension is smaller than a number of said plurality of processing channels, assigning each of generated second arrays in order of generation to a respective processing channel of said plurality of processing channels as said input data.

According to an exemplary aspect, there is provided an apparatus for preparing, based on initial data, input data for an input layer of a machine learning model having said input layer, at least one inner layer, and an output layer, and being learned and/or deployed at processing hardware providing a plurality of processing channels, each processing channel comprising a dedicated processor and a dedicated memory range, wherein said initial data is arranged in a first array having a first dimension equal to or larger than 1, a second dimension equal to or larger than 1, and a third dimension equal to or larger than 1, the apparatus comprising

down-sampling means for, for each repetition of a plurality of repetitions, down-sampling said initial data in said first dimension and said second dimension with a same sample rate among said plurality of repetitions and different sample offsets among said plurality of repetitions for each index position in said third dimension as second arrays, and

assigning each of said second arrays in order of said plurality of repetitions to a respective processing channel of said plurality of processing channels as said input data.

According to an exemplary aspect, there is provided a computer program product comprising computer-executable computer program code which, when the program is run on a computer (e.g. a computer of an apparatus according to any one of the aforementioned apparatus-related exemplary aspects of the present disclosure), is configured to cause the computer to carry out the method according to any one of the aforementioned method-related exemplary aspects of the present disclosure.

Such computer program product may comprise (or be embodied) a (tangible) computer-readable (storage) medium or the like on which the computer-executable computer program code is stored, and/or the program may be directly loadable into an internal memory of the computer or a processor thereof.

Any one of the above aspects enables an improved resource utilization to thereby solve at least part of the problems and drawbacks identified in relation to the prior art.

By way of example embodiments, there is provided efficient utilization of machine learning processing resources.

More specifically, by way of example embodiments, there are provided measures and mechanisms for realizing efficient utilization of machine learning processing resources.

Thus, improvement is achieved by methods, apparatuses and computer program products enabling/realizing efficient utilization of machine learning processing resources.

Brief description of the drawings

In the following, the present disclosure will be described in greater detail by way of non-limiting examples with reference to the accompanying drawings, in which

FIG. 1 is a block diagram illustrating an apparatus according to example embodiments,

FIG. 2 is a block diagram illustrating an apparatus according to example embodiments,

FIG. 3 is a block diagram illustrating an apparatus according to example embodiments,

FIG. 4 is a block diagram illustrating an apparatus according to example embodiments,

FIG. 5 is a schematic diagram of a procedure according to example embodiments,

FIG. 6 is a schematic diagram of a procedure according to example embodiments,

FIG. 7 is a schematic diagram of an example of a tiny AI accelerator, and in particular illustrates an architecture of such exemplary tiny AI accelerator,

FIG. 8 is a schematic diagram illustrating in principle utilization of such exemplary tiny AI accelerator dependent on input channels, and in particular illustrates a processor utilization with varying input channels on the exemplary tiny AI accelerator,

FIG. 9 (FIG. 9(a), FIG. 9(b), FIG. 9(c)) illustrates a comparison of utilization of such exemplary tiny AI accelerator according to established principles (FIG. 9(b)) and according to principles following example embodiments (FIG. 9(c)),

FIG. 10 is a schematic diagram providing an overview of processing steps according to example embodiments,

FIG. 11 is a schematic diagram illustrating details of processing steps according to example embodiments,

FIG. 12 is a schematic diagram comparing results according to example embodiments with results of known machine learning (ML) optimization techniques,

FIG. 13 is a schematic diagram comparing resource utilizations according to example embodiments with results of known ML optimization techniques, and

FIG. 14 is a block diagram alternatively illustrating apparatuses according to example embodiments.

Detailed description

The present disclosure is described herein with reference to particular non-limiting examples and to what are presently considered to be conceivable embodiments. A person skilled in the art will appreciate that the disclosure is by no means limited to these examples, and may be more broadly applied.

It is to be noted that the following description of the present disclosure and its embodiments mainly refers to specifications being used as non-limiting examples for certain exemplary AI/ML learning and/or inference related configurations and deployments. Namely, the present disclosure and its embodiments are mainly described in relation to tiny AI accelerators. As such, the description of example embodiments given herein specifically refers to terminology which is directly related thereto. Such terminology is only used in the context of the presented non-limiting examples, and does naturally not limit the disclosure in any way. Rather, any other ML/AI related system deployment, etc. may also be utilized as long as compliant with the features described herein.

Hereinafter, various embodiments and implementations of the present disclosure and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

According to example embodiments, in general terms, there are provided measures and mechanisms for (enabling/realizing) efficient utilization of machine learning processing resources.

As mentioned above, the hardware-level optimizations of recent tiny AI accelerators bring significant performance improvements. However, these hardware-level optimizations also have several constraints at the expense of the optimizations.

In particular, the per-processor memory architecture highly restricts a supported input data size (e.g. input image size in case of image-related AI processing, e.g. vision models) because the data memory each processor can use for its input/output channels is limited to the capacity of its dedicated memory instance, which is a fraction of the total data memory divided by the number of processors.

Consequently, most e.g. vision models for these accelerators are designed to support very small images, such as $32 \times 32$ pixels.

Given that images captured by cameras are often generated with higher resolutions, down-sampling may be inevitable, leading to accuracy degradation due to information loss from the original image.

Further, processors and data memory may be underutilized for the input layer due to the per-processor memory architecture. Namely, since e.g. in case of image-related AI processing (e.g. vision models), input images typically have a low number of channels (e.g., three channels: red-green-blue (RGB)), only a limited number of processors tied to memory instances may be utilized, while the remaining processors remain idle.

As an example, the Analog Devices MAX78000 tiny AI accelerator has 64 processors, and in the above outlined case, 61 of 64 processors and per-processor memory instances may remain unused in the first layer.

The distinctive characteristic of tiny AI accelerators compared to conventional MCUs is parallel processors that parallelize per-channel CNN operations across these processors.

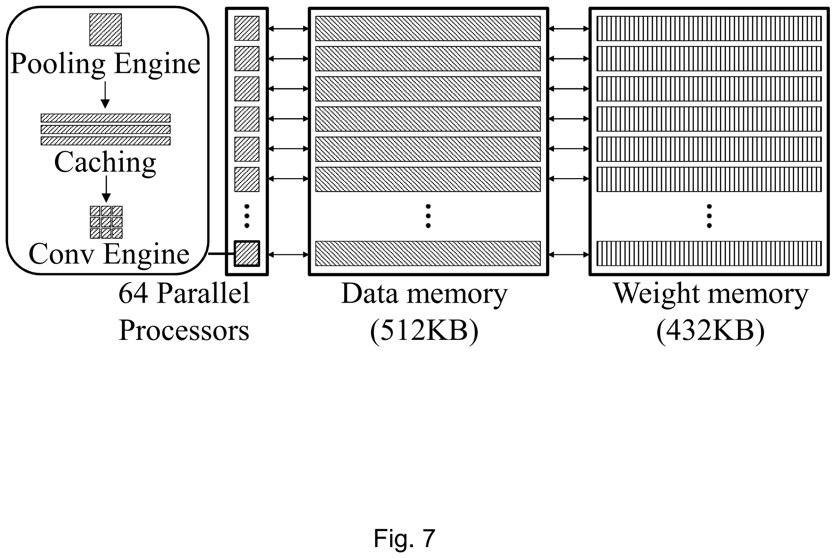

FIG. 7 is a schematic diagram of an example of a tiny AI accelerator, and in particular illustrates an abstracted architecture of such exemplary tiny AI accelerator.

The exemplary tiny AI accelerator has 64 parallel convolutional processors, each capable of performing specific operations independently.

To maximize performance, each processor has a dedicated memory instance, i.e., per-processor memory instance, that optimizes data transfer with parallel access.

For each CNN layer, operations on individual channels are assigned to separate convolutional processors and executed simultaneously, thereby significantly reducing latency typically associated with convolutional algorithms.

Each processor may have a pooling engine, an input cache, and a convolution engine, that can handle e.g. 3 by 3 kernels.

The exemplary CNN accelerator may include 512 KB of data memory and 432 KB of weight storage memory. Within the 512 KB of data memory, an 8 KB per-processor memory instance is allocated to each of the 64 processors.

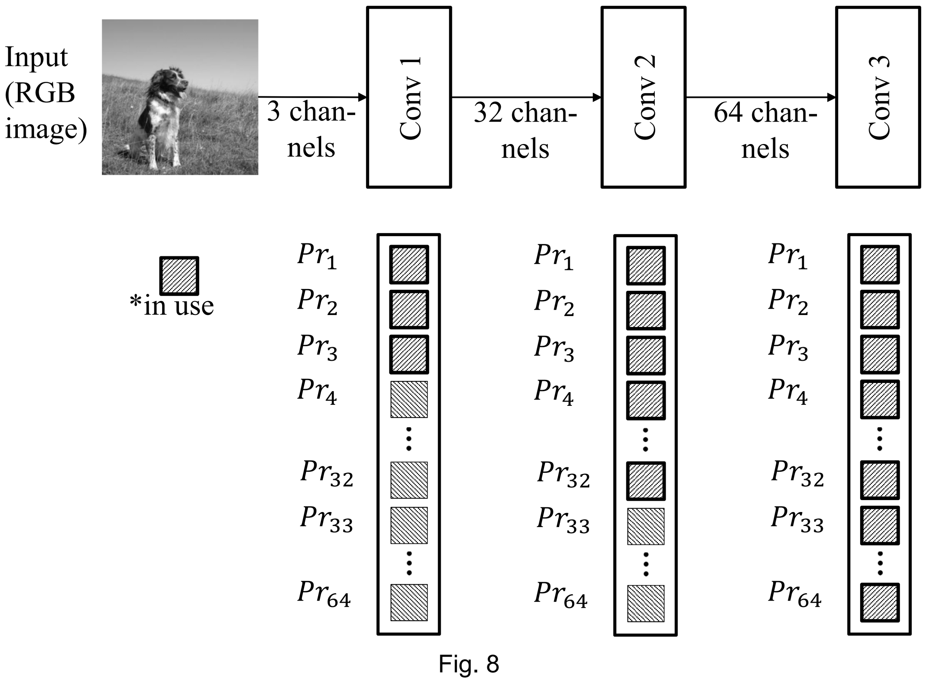

FIG. 8 is a schematic diagram illustrating in principle utilization of such exemplary tiny AI accelerator dependent on input channels, and in particular illustrates a processor utilization with varying input channels on the exemplary tiny AI accelerator.

More specifically, FIG. 8 shows the utilization of the processors ($Pr_i$) for executing CNNs with varying sizes of the input channels. Each processor communicates with a dedicated memory instance for each data channel. For example, given a three-channel image, three parallel processors are utilized in the first layer.

Several studies have explored augmenting images with additional information to construct multi-channel inputs for CNNs.

As an example, a multi-modality image fusion approach is proposed, combining visible, mid-wave infrared, and motion images for enhanced object detection.

As a further example, depth-aware CNN for image segmentation is proposed.

These approaches require extra sensing channels to acquire data, such as infrared cameras and depth cameras.

Similarly, other research has incorporated location data to improve performance for segmentation and object detection tasks.

For instance, CoordConv pointed out the limitation of traditional CNNs that relied solely on RGB images for the coordinate transformation problem and introduced the augmentation of i and j coordinates, which improved object detection efficiency.

However, these methodologies often necessitate additional sensor modalities or are tailored for specific applications such as object detection, which restricts their general use.

As mentioned in earlier, tiny AI accelerators leverage per-processor memory instances for faster data transfer with parallel access. However, as outlined above, such improvement potentially comes at the expense of constraints, for example in relation to rapid data access, namely, low image resolution, and underutilized processors and data memory.

Low image resolution due to limited per-processor memory size:

Exemplary tiny AI accelerators have, for example, 512 KB data memory, which is divided into 64 segments of 8 KB memory instances per processor, each storing the data of each input channel.

This memory architecture highly restricts the supported input resolution.

For instance, an input image (or other matrix/array shaped input data) with a shape $3 \times 224 \times 224$ (channel, height, and width), which is a typical size of ImageNet, does not fit into the mentioned memory per channel even with e.g. Q7 format (one byte for each value), as the memory limit for each channel is 8 KB (while $224 \times 224$ is about 50 KB, which is (much) larger than 8KB).

Thus, the current practice on tiny AI accelerators is to shrink the resolution of input images (or more general, input data) by down-sampling, and accordingly, to design small models to process lower-resolution images (data), e.g., $3 \times 32 \times 32$ (channel, height, and width).

With this approach, most (a lot) of the information of the original image (data) is lost due to the vast down-sampling, which might lead to sub-optimal performance.

Underutilized processors and data memory for the input layer:

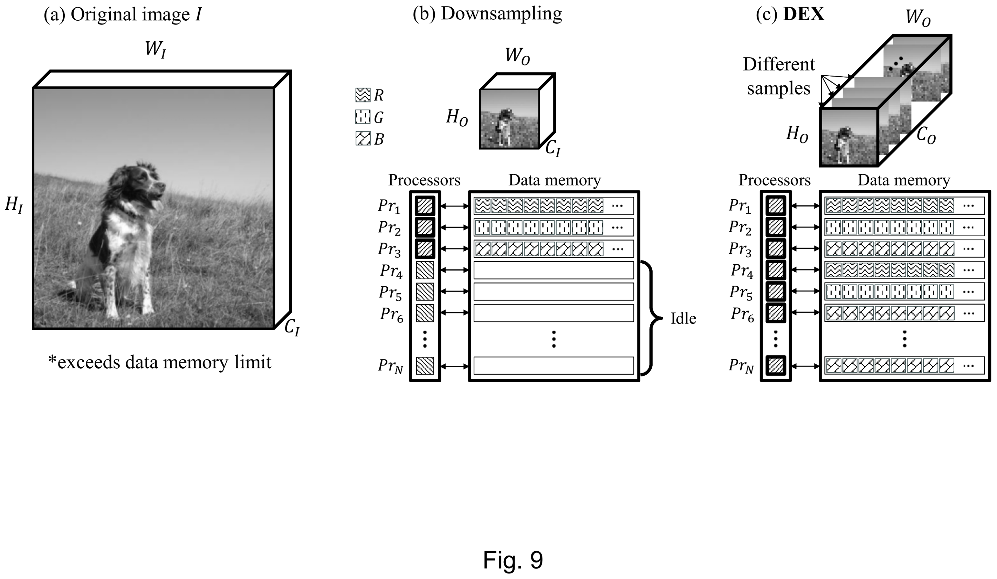

Although per-processor memory instances allow simultaneous memory access from different processors, it also brings inefficiency in data memory and processor utilization, especially in the input layer. Specifically, given an input image I (as an example of data) with the number of channels $C_I$, height $H_I$, and width $W_I$ (e.g., $3 \times 224 \times 224$) as shown in FIG. 9(a), FIG. 9(b) illustrates the down-sampled image with the number of channels $C_I$, height $H_O$, and width $W_O$ (e.g., $3 \times 32 \times 32$), and its data memory usage in the AI accelerator.

With three channels (e.g. RGB), channel data are separately stored for each data memory instance for parallel execution.

As there is N processors and corresponding data memory instances, it leaves the remaining N-3 processors and data memory instances idle.

This provides an opportunity to utilize these idle data memory instances and parallel processors.

Hence, in brief, according to example embodiments, to overcome the above-discussed constraints while still benefiting from the acceleration power of tiny AI accelerators, accuracy is boosted by extending the data channels to incorporate additional image information into unused data memory instances and processors, instead of simple down-sampling.

Owing to the parallel processing and memory access capabilities of tiny AI accelerators, according to example embodiments, this accuracy improvement is achieved without compromising inference latency. Specifically, according to example embodiments, two procedures are implemented: (1) patch-wise even sampling, where pixels from the original image (data) are evenly sampled, and (2) channel-wise stacking, which arranges these samples across multiple channels.

FIG. 9 (FIG. 9(a), FIG. 9(b), FIG. 9(c)) illustrates a comparison of utilization of such exemplary tiny AI accelerator according to established principles (FIG. 9(b)) and according to principles following example embodiments (FIG. 9(c)).

In particular, FIG. 9(a) illustrated an original image that exceeds the data memory limit of the AI accelerator. FIG. 9(b) illustrates a down-sampled image that fits the data memory but does not fully utilize parallel processors and data memory. FIG. 9(c) illustrates an image (data) generated according to principles of example embodiments that incorporates more information from the original image by extending data across channels with full utilization of parallel processors and data memory instances.

Namely, the key intuition behind data channel extension for efficient CNN execution on tiny AI accelerators according to example embodiments is that the remaining data memory is utilized to incorporate additional information from the original image into neural networks by extending the input data across channels.

By utilizing this additional memory and processors, extra sample information can be incorporated for feature learning (and inference) without sacrificing latency.

FIG. 9(c) shows the input data reshaped utilizing principles according to example embodiments, where each channel contains different pixel information from the original image. Extending data across channels (from $C_I$ to $C_O$) according to exemplary embodiments enables full utilization of the data memory and associated parallel processors.

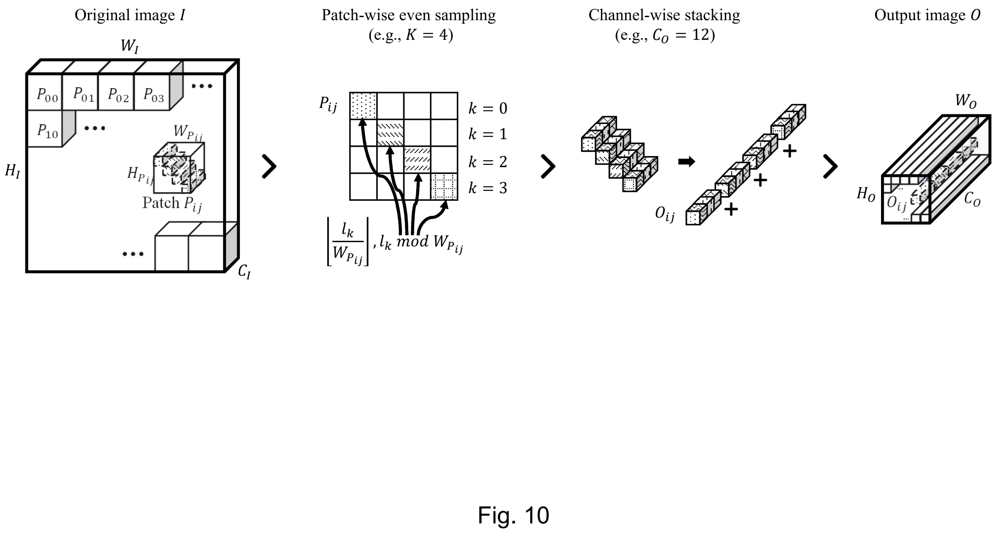

FIG. 10 is a schematic diagram providing an overview of processing steps according to example embodiments.

As illustrated in FIG. 10, according to example embodiments, the original image I is divided into multiple patches. According to example embodiments, then, pixels are evenly sampled from each patch $P_{ij}$, and an output pixel $O_{ij}$ is constructed by stacking samples across channels.

In particular, given an input image I with a number of channels $C_I$, height $H_I$, and width $W_I$, according to example embodiments, an output image O with an extended number of channels $C_O$, height $H_O$, and width $W_O$ (e.g., $64 \times 32 \times 32$) is generated via patch-wise even sampling and channel-wise stacking.

Example embodiments are specified below in more detail.

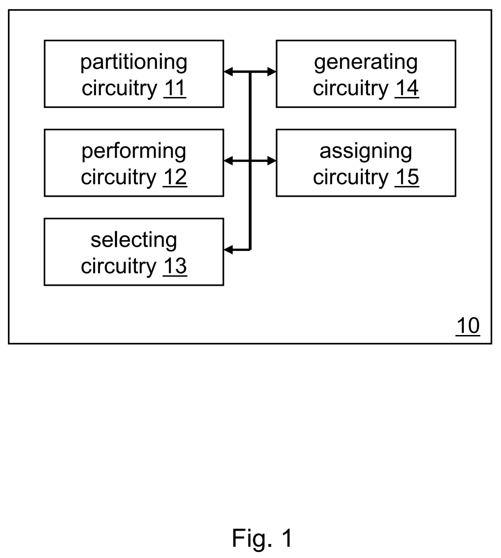

FIG. 1 is a block diagram illustrating an apparatus 10 according to example embodiments. The apparatus 10 (for preparing, based on initial data, input data for an input layer of a machine learning model having said input layer, at least one inner layer, and an output layer, and being learned and/or deployed at processing hardware providing a plurality of processing channels, each processing channel comprising a dedicated processor and a dedicated memory range, wherein said initial data is arranged in a first array having a first dimension equal to or larger than 1, a second dimension equal to or larger than 1, and a third dimension equal to or larger than 1, wherein a data amount of each element of said first array is equal to a predetermined amount) comprises partitioning circuitry 11, performing circuitry 12, selecting circuitry 13, generating circuitry 14, and assigning circuitry 15. If said predetermined amount multiplied with a size of said first dimension and a size of said second dimension exceeds a size of said dedicated memory range and if said third dimension is smaller than a number of said plurality of processing channels:

- the partitioning circuitry 11 partitions said first array in said first dimension and said second dimension into a plurality of uniform sub-arrays, wherein a number of said plurality of sub-arrays is based on said dedicated memory range,
- the performing circuitry 12 performs, for each sub-array field index position of a plurality of selected sub-array field index positions, a down-sampling operation on said first array of said initial data, and
- the assigning circuitry 15 assigns each of generated second arrays in order of generation to a respective processing channel of said plurality of processing channels as said input data.

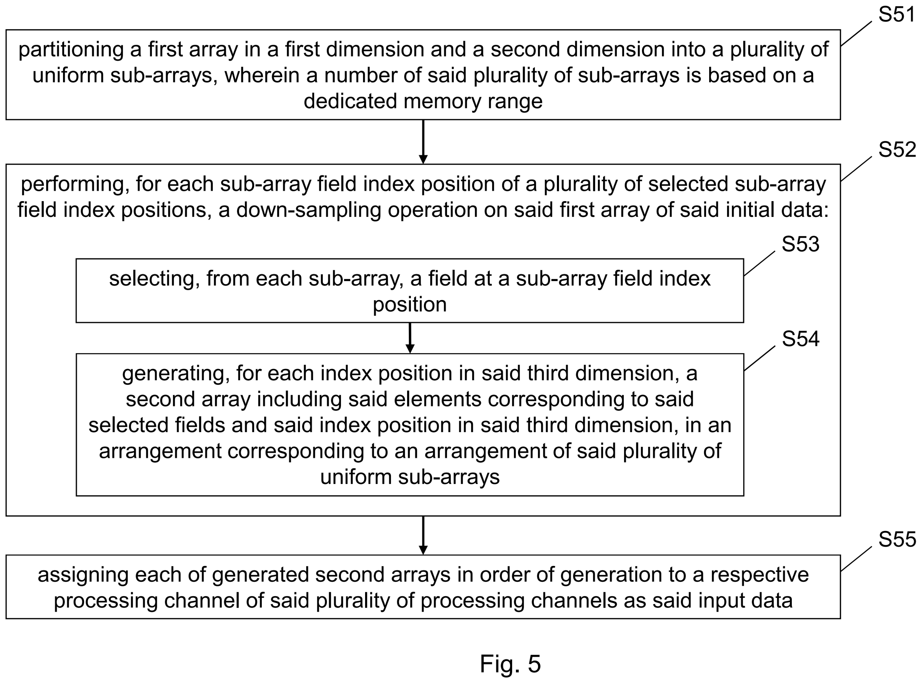

The down-sampling operation includes: selecting (by selecting circuitry 13), from each sub-array, a field at said sub-array field index position, and generating (by generating circuitry 14), for each index position in said third dimension, a second array including said elements corresponding to said selected fields and said index position in said third dimension, in an arrangement corresponding to an arrangement of said plurality of uniform sub-arrays. FIG. 5 is a schematic diagram of a procedure according to example embodiments. The apparatus according to FIG. 1 may perform the method of FIG. 5 but is not limited to this method. The method of FIG. 5 may be performed by the apparatus of FIG. 1 but is not limited to being performed by this apparatus.

As shown in FIG. 5, a procedure (for preparing, based on initial data, input data for an input layer of a machine learning model having said input layer, at least one inner layer, and an output layer, and being learned and/or deployed at processing hardware providing a plurality of processing channels, each processing channel comprising a dedicated processor and a dedicated memory range, wherein said initial data is arranged in a first array having a first dimension equal to or larger than 1, a second dimension equal to or larger than 1, and a third dimension equal to or larger than 1, wherein a data amount of each element of said first array is equal to a predetermined amount) according to example embodiments comprises, if said predetermined amount multiplied with a size of said first dimension and a size of said second dimension exceeds a size of said dedicated memory range and if said third dimension is smaller than a number of said plurality of processing channels, an operation of partitioning (S51) said first array in said first dimension and said second dimension into a plurality of uniform sub-arrays, wherein a number of said plurality of sub-arrays is based on said dedicated memory range, an operation of performing (S52), for each sub-array field index position of a plurality of selected sub-array field index positions, a down-sampling operation on said first array of said initial data, an operation of selecting (S53) (as part of said operation of performing (S52)), from each sub-array, a field at said sub-array field index position, an operation of generating (S54) (as part of said operation of performing (S52)), for each index position in said third dimension, a second array including said elements corresponding to said selected fields and said index position in said third dimension, in an arrangement corresponding to an arrangement of said plurality of uniform sub-arrays, and an operation of assigning (S55) each of generated second arrays in order of generation to a respective processing channel of said plurality of processing channels as said input data.

The first dimension may correspond to a height as used herein.

The second dimension may correspond to a width used herein.

The third dimension may correspond to (color) channels used herein.

The size of said second dimension may correspond to a data amount of one channel of original image as used herein.

The uniform sub-arrays may correspond to patches used herein.

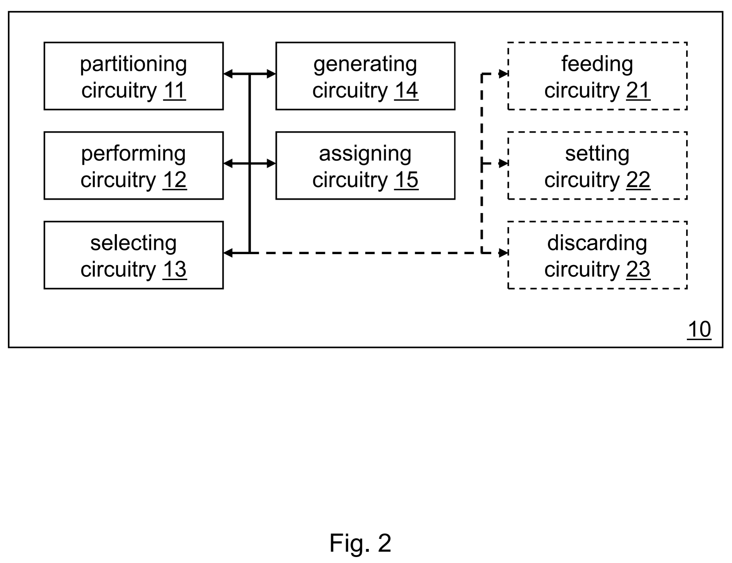

FIG. 2 is a block diagram illustrating an apparatus according to example embodiments. In particular, FIG. 2 illustrates a variation of the apparatus shown in FIG. 1. The apparatus according to FIG. 2 may thus further comprise a feeding circuitry 21, a setting circuitry 22, and/or a discarding circuitry 23.

In an embodiment at least some of the functionalities of the apparatus shown in FIG. 1 (or 2) may be shared between two physically separate devices forming one operational entity. Therefore, the apparatus may be seen to depict the operational entity comprising one or more physically separate devices for executing at least some of the described processes.

According to a variation of the procedure shown in FIG. 5, exemplary additional operations are given, which are inherently independent from each other as such.

According to such variation, an exemplary method according to example embodiments may comprise an operation of feeding said input data to said input layer of said machine learning model based on a result of said assigning.

According to a variation of the procedure shown in FIG. 5, exemplary additional operations are given, which are inherently independent from each other as such. According to such variation, an exemplary method according to example embodiments may comprise an operation of setting said plurality of selected sub-array field index positions based on said number of said plurality of processing channels and a size of said third dimension.

According to a variation of the procedure shown in FIG. 5, exemplary details of the setting operation (setting said plurality of selected sub-array field index positions) are given, which are inherently independent from each other as such. Such exemplary setting operation (setting said plurality of selected sub-array field index positions) according to example embodiments may comprise an operation of setting a number of said plurality of selected sub-array field index positions as an integer resulting from ceiling said number of said plurality of processing channels divided by said third dimension of said first array.

According to a variation of the procedure shown in FIG. 5, exemplary details of the assigning operation (S55) are given, which are inherently independent from each other as such. Such exemplary assigning operation (S55) according to example embodiments may comprise an operation of discarding surplus generated second arrays exceeding said number of said plurality of processing channels.

According to further example embodiments, said initial data is image data, wherein said first dimension and said second dimension specify a resolution of said image data, and each index position in said third dimension corresponds to a color component.

According to further example embodiments, said third dimension has a size of 3, wherein a first index position in said third dimension corresponds to a red color component, a second index position in said third dimension corresponds to a green color component, and a third index position in said third dimension corresponds to a blue color component.

According to further example embodiments, said third dimension has a size of 1, wherein a first index position in said third dimension corresponds to a black color component.

According to a variation of the procedure shown in FIG. 5, exemplary additional operations are given, which are inherently independent from each other as such. According to such variation, an exemplary method according to example embodiments may comprise an operation of setting said number of said plurality of sub-arrays as an integer equal to or smaller than said size of said dedicated memory range divided by said predetermined amount.

According to a variation of the procedure shown in FIG. 5, exemplary additional operations are given, which are inherently independent from each other as such. According to such variation, an exemplary method according to example embodiments may comprise an operation of setting said number of said plurality of sub-arrays based on a nominal two-dimensional array resolution per channel of said input data.

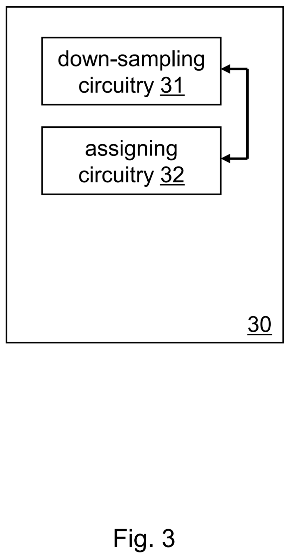

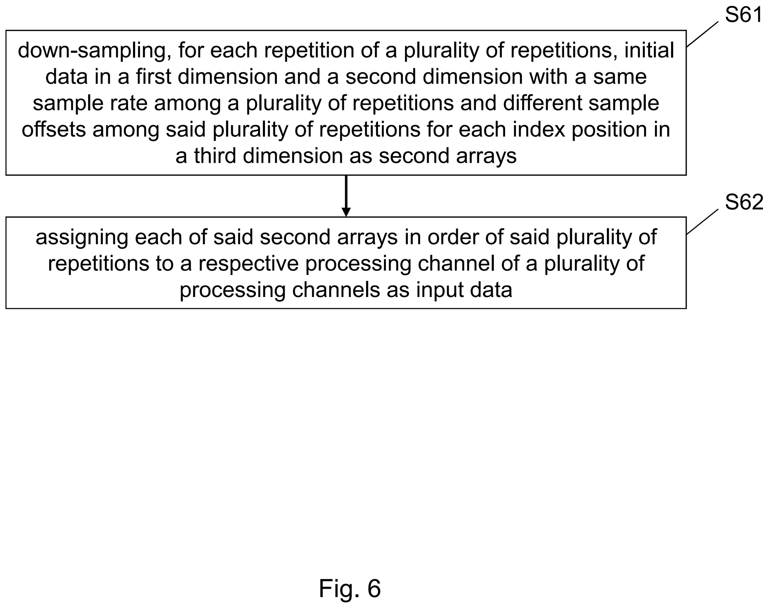

FIG. 3 is a block diagram illustrating an apparatus 30 according to example embodiments. The apparatus 30 (for preparing, based on initial data, input data for an input layer of a machine learning model having said input layer, at least one inner layer, and an output layer, and being learned and/or deployed at processing hardware providing a plurality of processing channels, each processing channel comprising a dedicated processor and a dedicated memory range, wherein said initial data is arranged in a first array having a first dimension equal to or larger than 1, a second dimension equal to or larger than 1, and a third dimension equal to or larger than 1) comprises down-sampling circuitry 31 and assigning circuitry 32. The down-sampling circuitry 31 down-samples, for each repetition of a plurality of repetitions, said initial data in said first dimension and said second dimension with a same sample rate among said plurality of repetitions and different sample offsets among said plurality of repetitions for each index position in said third dimension as second arrays. The assigning circuitry 32 assigns each of said second arrays in order of said plurality of repetitions to a respective processing channel of said plurality of processing channels as said input data. FIG. 6 is a schematic diagram of a procedure according to example embodiments. The apparatus according to FIG. 3 may perform the method of FIG. 6 but is not limited to this method. The method of FIG. 6 may be performed by the apparatus of FIG. 3 but is not limited to being performed by this apparatus.

As shown in FIG. 6, a procedure (for preparing, based on initial data, input data for an input layer of a machine learning model having said input layer, at least one inner layer, and an output layer, and being learned and/or deployed at processing hardware providing a plurality of processing channels, each processing channel comprising a dedicated processor and a dedicated memory range, wherein said initial data is arranged in a first array having a first dimension equal to or larger than 1, a second dimension equal to or larger than 1, and a third dimension equal to or larger than 1) according to example embodiments comprises an operation of down-sampling (S61), for each repetition of a plurality of repetitions, said initial data in said first dimension and said second dimension with a same sample rate among said plurality of repetitions and different sample offsets among said plurality of repetitions for each index position in said third dimension as second arrays, and an operation of assigning (S62) each of said second arrays in order of said plurality of repetitions to a respective processing channel of said plurality of processing channels as said input data.

The first dimension may correspond to a height as used herein.

The second dimension may correspond to a width used herein.

The third dimension may correspond to (color) channels used herein.

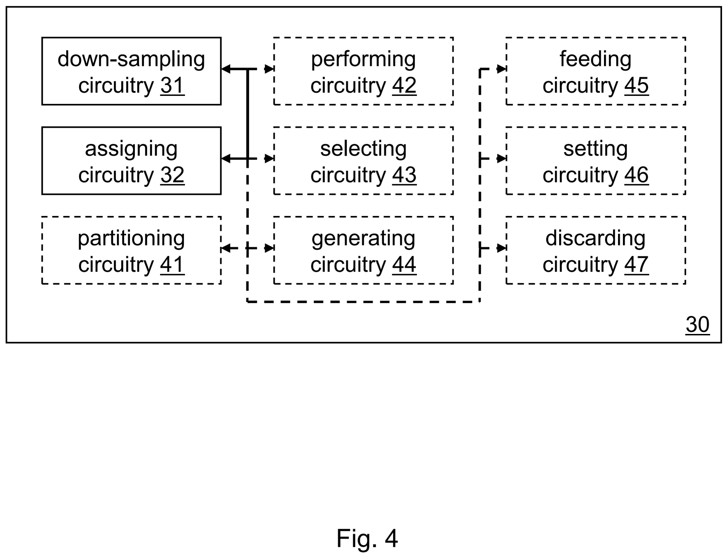

FIG. 4 is a block diagram illustrating an apparatus according to example embodiments. In particular, FIG. 4 illustrates a variation of the apparatus shown in FIG. 3. The apparatus according to FIG. 4 may thus further comprise a partitioning circuitry 41, a performing circuitry 42, a selecting circuitry 43, a generating circuitry 44, a feeding circuitry 45, a setting circuitry 46, and/or a discarding circuitry 47.

In an embodiment at least some of the functionalities of the apparatus shown in FIG. 3 (or 4) may be shared between two physically separate devices forming one operational entity. Therefore, the apparatus may be seen to depict the operational entity comprising one or more physically separate devices for executing at least some of the described processes.

According to variations of the procedure shown in FIG. 6, basic features discussed with respect to the apparatus 10 of FIG. 1 and 2 and with respect to the method of FIG. 5 and variations thereof discussed with respect to the method of FIG. 5 are applicable in combination with the apparatus 30 of FIG. 3 and 4 and with the method of FIG. 6 as well do then represent suitable concretizations of the apparatus 30 of FIG. 3 and 4 and with the method of FIG. 6.

Example embodiments outlined and specified above are explained below in more specific terms.

As mentioned above, according to example embodiments, two procedures are implemented: (1) patch-wise even sampling, where pixels from the original image (data) are evenly sampled, and (2) channel-wise stacking, which arranges these samples across multiple channels.

Patch-wise even sampling:

The purpose of patch-wise even sampling is to select samples evenly spaced across the original image while keeping the spatial relationship among pixels

Heretofore, according to example embodiments, first, a patch is defined from the original image (as example of an arrangement of data, e.g. data array) in which a corresponding output pixel is generated.

The i-th row and the j-th column of patch $P_{ij}$ in I are denoted as:

$$P_{ij} = I\left[\left[\left\lfloor i \cdot \frac{H_I}{H_O}\right\rfloor : \left\lfloor (i+1) \cdot \frac{H_I}{H_O}\right\rfloor, \left\lfloor j \cdot \frac{W_I}{W_O}\right\rfloor : \left\lfloor (j+1) \cdot \frac{W_I}{W_O}\right\rfloor\right]\right],$$

where [:,:] refers to a 2-D array slicing operation, specifying the selection of rows and columns sequentially, and $\lfloor \cdots \rfloor$ denoting a floor operator.

The number of patches is determined by the resolution of the output image (output data arrangement), i.e., $H_O \times W_O$.

For each patch $P_{ij}$, the corresponding output data $O_{ij}$ is generated.

This ensures that the spatial relationships among pixels in the input image are preserved in the output, maintaining spatial consistency throughout the process.

According to example embodiments, next, pixels within the patch are sampled considering the memory budget.

Specifically, $K = \left\lceil \frac{C_O}{C_I} \right\rceil$ is defined as the number of samples to be selected in each patch, with $\lceil \cdots \rceil$ denoting a ceiling operator.

Given the height of the patch $\$ H_{P_{ij}} = \left\lfloor (i+1) \cdot \frac{H_I}{H_O}\right\rfloor - \left\lfloor i \cdot \frac{H_I}{H_O}\right\rfloor$ and the width of the patch

$\$ W_{P_{ij}} = \left\lfloor (i+1) \cdot \frac{W_I}{W_O}\right\rfloor - \left\lfloor i \cdot \frac{W_I}{W_O}\right\rfloor$, the i-th row and j-th column of output $O_{ij}$ can be represented by:

$$O_{ij} = \left\{ P_{ij}\left[\left\lfloor \frac{l_k}{W_{P_{ij}}}\right\rfloor, l_k \, mod W_{P_{ij}}\right] \,\middle|\, l_k = k \cdot \left\lfloor \frac{H_{P_{ij}} \cdot W_{P_{ij}} - 1}{K - 1}\right\rfloor, \text{for } k = 0,1,...,K-1 \right\},$$

which means a collection of evenly distributed samples within each patch to encourage diverse information while minimizing the use of localized pixel information.

With patch-wise even sampling according to example embodiments, selected samples are evenly distributed both across patches and within each patch.

Channel-wise stacking:

Channel-wise stacking according to example embodiments arranges sampled data across multiple channels and keeps this procedure for all pixels to maintain data integrity.

Channel-wise stacking according to example embodiments is beneficial as it maintains consistency within each channel, preserving the spatial and contextual relationships of the sampled data.

According to example embodiments, after patch-wise even sampling, the samples are stacked across the channel axis in ascending order of the index k, and this is repeated for each $O_{ij}$.

It is noted that $I_k=0$, when K=1, and this is identical to traditional down-sampling.

If $K > \frac{C_O}{C_I}$, according to example embodiments, the target channel is filled up with P's data until the limit, and the remaining channels are discarded.

For instance, when using RGB channels ($C_I$=3), and if $C_O$=64 and K=22, only the red channel is taken for i=21, and the remaining green and blue channels that exceed the channel limit of 64 are discarded.

A pseudo-code implementing procedures according to example embodiments and in particular reflecting a channel extension algorithm (named here exemplarily "DEX Channel Extension Algorithm" (DEX: data channel extension)) is provided below.

---

**Algorithm 1** DEX Channel Extension Algorithm

---

**Input:** Source image $I$ in a shape $(C_I, H_I, W_I)$
**Output:** Reshaped image $O$ in a shape $(C_O, H_O, W_O)$
1: $O \leftarrow$ zeros$(C_O, H_O, W_O)$
2: **for** $i \leftarrow 0$ **to** $H_O - 1$ **do**
3:      **for** $j \leftarrow 0$ **to** $W_O - 1$ **do**
4:          start_row, end_row $\leftarrow$ floor$(i \cdot \frac{H_I}{H_O})$, floor$((i+1) \cdot \frac{H_I}{H_O})$
5:          start_col, end_col $\leftarrow$ floor$(j \cdot \frac{W_I}{W_O})$, floor$((j+1) \cdot \frac{W_I}{W_O})$
6:          $P_{ij} \leftarrow I[:, \text{start\_row} : \text{end\_row}, \text{start\_col} : \text{end\_col}]$      ▷ Patch $P_{ij}$ of $I$
7:          $K \leftarrow$ ceil$(\frac{C_O}{C_I})$      ▷ Number of samples to be selected in $P_{ij}$
8:          **for** $k \leftarrow 0$ **to** $K - 1$ **do**      ▷ Get channels of $O_{ij}$ from $P_{ij}$
9:              $H_{P_{ij}} \leftarrow$ end_row $-$ start_row
10:             $W_{P_{ij}} \leftarrow$ end_col $-$ start_col
11:             $l_k = k \cdot$ floor$(\frac{H_{P_{ij}} \cdot W_{P_{ij}} - 1}{K - 1})$
12:             $O[k \cdot C_I : (k+1) \cdot C_I, i, j] = P_{ij}[:, \text{floor}(\frac{l_k}{W_{P_{ij}}}), l_k \mod W_{P_{ij}}]$
13: **return** $O$

---

As a result, according to example embodiments, additional pixel information from the original image is incorporated/utilized, and this can improve the accuracy of CNNs.

Namely, the extended channels provide further samples of adjacent areas in the original image, significantly broadening the receptive fields of features in the initial CNN layer.

This expansion allows the model to detect more complex and subtle features early in the processing pipeline, which is critical for the nuanced understanding and interpretation in particular of visual data.

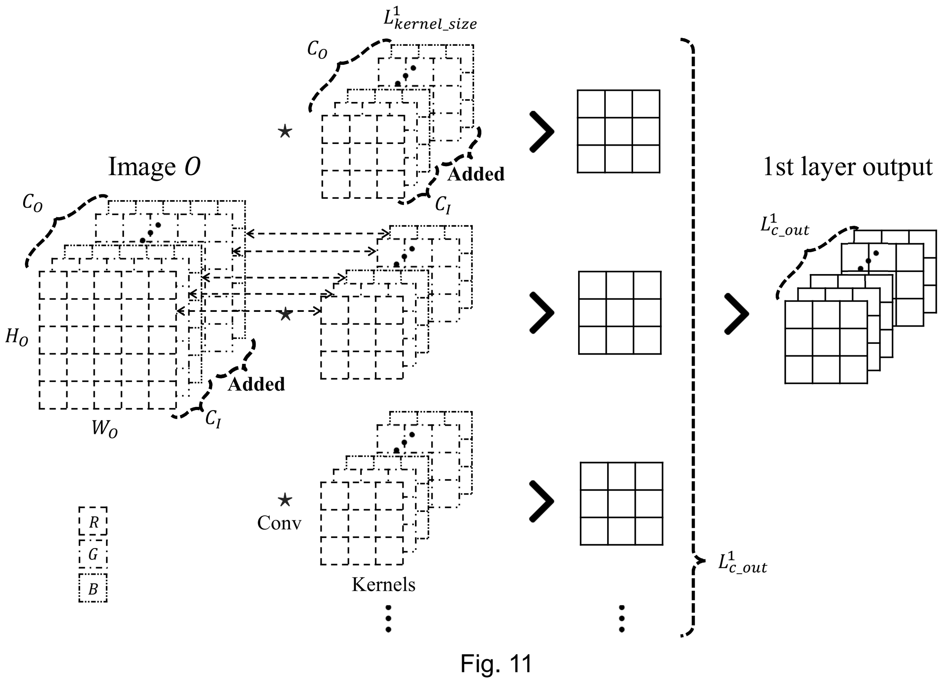

FIG. 11 is a schematic diagram illustrating details of processing steps according to example embodiments, and in particular illustrates an initial CNN layer's operation according to example embodiments.

Specifically, FIG. 11 visualizes how the first CNN layer operates with the data prepared according to example embodiments, where $L^1_{kernel\_size}$ and $L^1_{c\_out}$ refer to the kernel size and the output channel size of the first layer, respectively.

FIG. 11 illustrates the application of the convolution operation across each enhanced channel ($C_O$ as opposed to $C_I$), where distinct kernel weights are applied to each channel.

This ensures that the additional information is integrated into the output feature maps, thereby enriching the model's feature extraction capabilities.

The convolutional layer processes the increased channel input, which is reflected in weight sums that construct output channels.

The principles of example embodiments impact the number of parameters.

Given the first CNN layer's kernel size $L^1_{kernel\_size}$ and the first layer's channel output size $L^1_{c\_out}$, the number of parameters required for the input layer can be calculated as $O_C \cdot L^1_{kernel\_size} \cdot L^1_{c\_out}$.

If $O_C$ is 3, it is the same as the traditional down-sampling without the channel extension according to example embodiments.

Advantageously, the channel extension according to example embodiments does not incur additional inference latency on the AI accelerator.

It was unfold that the channel extension increases by about 3% of the total parameters, as shown below with reference to experiment results. The rest of the layers remain the same.

However, utilization of the original image information is significantly increased.

Namely, with traditional down-sampling, the utilization of the original input is $\frac{H_O \cdot W_O}{H_I \cdot W_I}$, while, when applying principles according to example embodiments, the utilization is extended to $\frac{C_O}{C_I} \cdot \frac{H_O \cdot W_O}{H_I \cdot W_I}$.

For instance, given a 3×256×256 input image, a down-sampled image 3×32×32 utilizes only 1.6% of the original information, while when applying principles according to example embodiments and assuming an output channel size $C_O$=64, the resulting output image can utilize 33.3% of the original information.

When applying principles according to example embodiments, all the original information can be accommodated when $C_O = C_I \cdot \frac{H_I \cdot W_I}{H_O \cdot W_O}$.

Increasing the number of output channels according to example embodiments allows to accommodate (more of) the original image information.

The number of output channels denoted as $O_C$, that can be extended without increasing latency on AI accelerators is limited by the number of data memory instances $D_N$, i.e., $O_C < D_N$. For example, an AI accelerator having 64 data memory instances (such as the exemplarily mentioned Analog Devices MAX78000) allows the principles according to example embodiments to support up to $O_C$=64 output channels without affecting inference latency.

Effects of example embodiments are highlighted with reference to example experiment results.

Experimental settings:

On-device testbed: Example embodiments were evaluated on the off-the-shelf Analog Devices MAX78000 feather board and Analog Devices MAX78002 Evaluation Kit, which are development platforms for the Analog Devices MAX78000 and Analog Devices MAX78002, respectively.

Model training and deployment: Four models officially supported in the Analog Devices MAX78000/78002 training framework were used: SimpleNet, WideNet, EfficientNetV2, and MobileNetV2. The supported models from the framework were trained via quantization-aware training with 8-bit integers in PyTorch. The official training configuration was followed. The checkpoints are synthesized as embedded C codes for via the Analog Devices MAX78000/70002 tynthesis framework. SimpleNet and WideNet are developed for Analog Devices MAX78000, while EfficientNetV2 and MobileNetV2 are developed for Analog Devices MAX78002, considering the size of the models. All models are originally designed to take 3×32×32 inputs, and the number of the channels in the first layer were increased to 64.

Datasets: It was evaluated on four common vision datasets: (1) ImageNette, a ten-class subset of ImageNet with 9469/3925 train/test samples with the original image shape of 3×350×350, (2) Caltech101 with 101 objects classes having 6941/1736 train/test samples with the original image shape of 3×300×300, (3) Caltech256 with 256 objects classes having 23824/5956 train/test samples with the original image shape of 3×300×300, and (4) Food101 with 101 food categories with 75750/25250 train/test samples with the original image shape of 3×512×512.

Baselines: Results of application of example embodiments are compared with the down-sampling method which is a straightforward way to reduce the size of the input under memory-constrained devices. This down-sampling method down-samples the input image to 3×32×32. In addition, results of application of example embodiments are compared with CoordConv which pointed out the limitation of traditional CNNs that relied on RGB images for the coordinate transformation problem and introduced the augmentation of i and j coordinates, which improved object detection efficiency by using two extra channels. The authors of CoordConv also introduced the third channel for an r coordinate, where $r = \sqrt{(i - h/2)^2 + (j - w/2)^2}$, which was found by the authors of CoordConv effective in some experiments.

Results of experiments:

The following table (Table 1) illustrates an average classification accuracy (%) and corresponding standard deviations over three runs for each dataset and method. Bold type indicates those of the highest classification accuracy.

| Dataset | Method | SimpleNet | WideNet | EfficientNetV2 | MobileNetV2 | AVG (%) |
|---|---|---|---|---|---|---|
| ImageNette | Downsampling | 57.8 ± 1.2 | 61.8 ± 0.2 | 51.3 ± 0.5 | 62.0 ± 0.7 | 58.2 |
| | CoordConv | 58.3 ± 0.7 | 61.1 ± 0.6 | 52.2 ± 0.3 | 62.6 ± 0.9 | 58.5 |
| | CoordConv (r) | 56.1 ± 1.1 | 61.4 ± 0.2 | 52.3 ± 0.4 | 61.6 ± 1.1 | 57.9 |
| | **DEX (ours)** | **61.4 ± 0.6** | **65.6 ± 0.6** | **55.8 ± 0.5** | **64.4 ± 0.6** | **61.8** |
| Caltech101 | Downsampling | 54.6 ± 2.1 | 55.8 ± 1.2 | 38.6 ± 0.9 | 51.4 ± 1.6 | 50.1 |
| | CoordConv | 54.1 ± 2.0 | 57.7 ± 0.5 | 38.8 ± 1.1 | 50.6 ± 0.4 | 50.3 |
| | CoordConv (r) | 52.7 ± 0.7 | 56.5 ± 2.1 | 38.2 ± 1.4 | 49.2 ± 1.1 | 49.1 |
| | **DEX (ours)** | **56.9 ± 1.3** | **60.2 ± 0.4** | **44.5 ± 1.5** | **53.3 ± 1.7** | **53.7** |
| Caltech256 | Downsampling | 19.8 ± 0.6 | 20.8 ± 0.5 | 14.7 ± 0.4 | 22.4 ± 1.0 | 19.4 |
| | CoordConv | 19.7 ± 0.8 | 20.6 ± 1.0 | 14.3 ± 0.4 | 22.9 ± 1.0 | 19.4 |
| | CoordConv (r) | 20.9 ± 0.2 | 20.6 ± 0.5 | 14.3 ± 0.2 | 22.9 ± 0.0 | 19.7 |
| | **DEX (ours)** | **22.8 ± 0.5** | **22.9 ± 0.9** | **18.2 ± 0.4** | **25.4 ±1.0** | **22.3** |
| Food101 | Downsampling | 15.8 ± 0.3 | 17.7 ± 1.0 | 12.2 ± 0.2 | 22.5 ± 0.8 | 17.0 |
| | CoordConv | 16.3 ± 1.1 | 17.9 ± 1.2 | 12.2 ± 0.2 | 21.7 ± 0.8 | 17.0 |
| | CoordConv (r) | 16.1 ± 0.4 | 17.0 ± 0.3 | 11.9 ± 0.8 | 20.7 ± 0.0 | 16.4 |
| | **DEX (ours)** | **18.3 ± 0.9** | **20.5 ± 0.0** | **15.2 ± 0.3** | **23.7 ± 0.8** | **19.4** |

This table shows the overall accuracy for four different datasets with the baselines and for example embodiments. As shown, extending data channels to utilize additional input information improves accuracy. Specifically, example embodiments achieved 3.1%p higher accuracy compared to down-sampling, and 2.8%p higher accuracy compared to CoordConv across datasets. CoordConv shows only a minor improvement over down-sampling (0.1%p improvement on average). This finding aligns with previous results indicating that CoordConv is useful for specific tasks such as object detection, where coordinate information is important. CoordConv (r) has a similar pattern to CoordConv. Overall, the accuracy improvement according to example embodiments shows the effectiveness of using extra information from the original image for feature learning.

The following table (Table 2) illustrates a model size (Size), a utilization of the original image information (InfoRatio), an accelerator's processor utilization for the first layer (ProcUtil), and an inference latency on the accelerator (Latency), for different models and methods averaged over three runs.

| Model | Method | InputChan | Size (KB) | InfoRatio (×) | ProcUtil (%) | Latency ($\mu s$) |
|---|---|---|---|---|---|---|
| SimpleNet | Downsampling | 3 | 162.6 | 1.0 | 4.7 | 2592 ± 1 |
| | CoordConv | 5 | 162.9 | 1.0 | 7.8 | 2592 ± 2 |
| | CoordConv (r) | 6 | 163.0 | 1.0 | 9.4 | 2592 ± 2 |
| | **DEX (ours)** | 64 | 171.2 | 21.3 | 100.0 | 2591 ± 1 |
| WideNet | Downsampling | 3 | 306.4 | 1.0 | 4.7 | 3820 ± 1 |
| | CoordConv | 5 | 306.9 | 1.0 | 7.8 | 3820 ± 0 |
| | CoordConv (r) | 6 | 307.1 | 1.0 | 9.4 | 3819 ± 1 |
| | **DEX (ours)** | | 319.3 | 21.3 | 100.0 | 3818 ± 1 |
| EfficientNetV2 | Downsampling | 3 | 742.4 | 1.0 | 4.7 | 11688 ± 2 |
| | CoordConv | 64 5 | 743.0 | 1.0 | 7.8 | 11685 ± 3 |
| | CoordConv (r) | 6 | 743.2 | 1.0 | 9.4 | 11689 ± 1 |
| | **DEX** (ours) | 64 | 759.6 | 21.3 | 100.0 | 11690 ± 2 |

(continued)

| Model | Method | InputChan | Size (KB) | InfoRatio ($\times$) | ProcUtil (%) | Latency ($\mu s$) |
|---|---|---|---|---|---|---|
| MobileNetV2 | Downsampling | 3 | 1317.8 | 1.0 | 4.7 | 3553 $\pm$ 4 |
| | CoordConv | 5 | 1318.2 | 1.0 | 7.8 | 3554 $\pm$ 1 |
| | CoordConv (r) | 6 | 1318.4 | 1.0 | 9.4 | 3554 $\pm$ 2 |
| | **DEX (ours)** | 64 | 1330.7 | 21.3 | 100.0 | 3552 $\pm$ 3 |

This table compares the resource usage of the baseline and example embodiments. Although example embodiments extend the number of channels in the first CNN layer to 64, the impact on the model size is negligible (an average increment of 3.2% compared to no channel extension). Example embodiments utilize 21.3$\times$ more image information compared to down-sampling, which is the primary reason for the accuracy improvement. As expected, example embodiments do not increase on-device inference latency, even though the processors on the AI accelerators are maximally utilized for information processing. This result is consistent across the four datasets, as all the models are designed to take the same input size in Analog Devices MAX78000 and Analog Devices MAX78002.

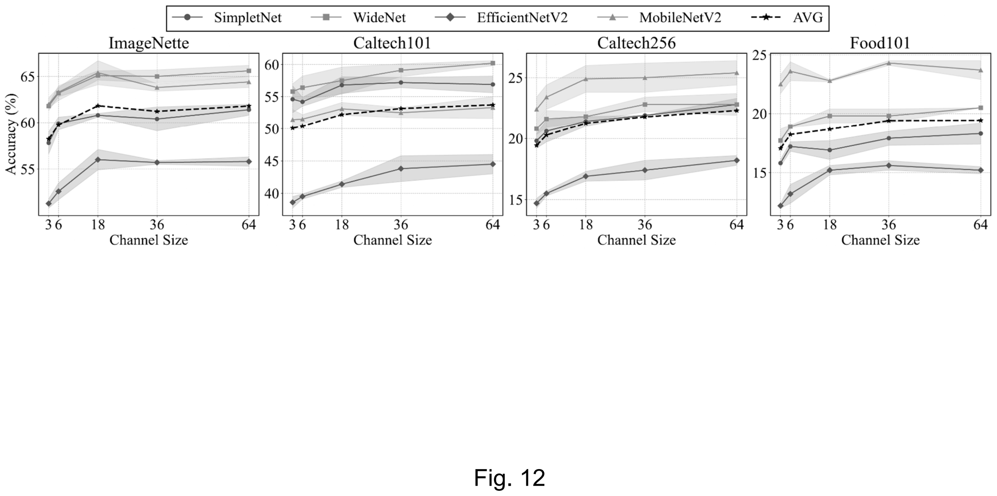

FIG. 12 is a schematic diagram comparing results according to example embodiments with results of known ML optimization techniques, and in particular illustrates an accuracy according to example embodiments and known ML optimization techniques varying with the (used) channel size. In FIG. 12, the shades represent standard deviations.

In the experiments, the size of the channels were varied from 3 (down-sampling) to 6, 18, 36, and 64 with example embodiments to understand the impact of the channel size in terms of accuracy.

FIG. 12 shows the accuracy variation according to the channel size across the four datasets. As shown, a higher number of channels increases accuracy in general. This means that selecting the highest channel size supported in AI accelerators might be an effective strategy in practice, considering that it does not incur the latency increase. Still, there are some cases where the accuracy of the highest channel size (64) is not the best among them. This means that there might be an optimal number of channels tailored to a specific dataset and model architecture, which might be found in the model development process.

The following table (Table 3) illustrates a model size (Size) with relative increment (%) compared to the three channels and average inference latency on the accelerator (Latency) with standard deviations over three runs, varying the channel size.

| | Model | Chan = 3 | Chan = 6 | Chan = 18 | Chan = 36 | Chan = 64 |
|---|---|---|---|---|---|---|
| **Size (KB)** | SimpleNet | 162.6 | 163.0 (+0.3%) | 164.7 (+1.3%) | 167.3 (+2.9%) | 171.2 (+5.3%) |
| | WideNet | 306.4 | 307.1 (+0.2%) | 309.6 (+1.0%) | 313.4 (+2.3%) | 319.3 (+4.2%) |
| | EfficientNetV2 | 742.4 | 743.2 (+0.1%) | 746.6 (+0.6%) | 751.7 (+1.3%) | 759.6 (+2.3%) |
| | MobileNetV2 | 1317.8 | 1318.4 (+0.0%) | 132z.0 (+0.2%) | 1324.8 (+0.5%) | 1330.7 (+1.0%) |
| **Latency ($\mu s$)** | SimpleNet | 2592 $\pm$ 1 | 2592 $\pm$ 2 | 2591 $\pm$ 1 | 2590 $\pm$ 1 | 2591 $\pm$ 1 |
| | WideNet | 3820 $\pm$ 1 | 3820 $\pm$ 2 | 3825 $\pm$ 1 | 3819 $\pm$ 3 | 3818 $\pm$ 1 |
| | EfficientNetV2 | 11688 $\pm$ 2 | 11691 $\pm$ 2 | 11692 $\pm$ 3 | 11691 $\pm$ 0 | 11690 $\pm$ 2 |
| | MobileNetV2 | 3553 $\pm$ 4 | 3553 $\pm$ 1 | 3552 $\pm$ 1 | 3554 $\pm$ 0 | 3552 $\pm$ 3 |

In terms of resource usage, the model size and inference latency were measured as shown in this table. The model size increment is negligible and inference latency remains the same across different numbers of channels. The model size and inference latency are the same for the four datasets, as all the models are designed to take the same input size in Analog Devices MAX78000 and Analog Devices MAX78002.

In terms of resource usage, further the information utilization from the original image and the processor utilization in the AI accelerators is measured.

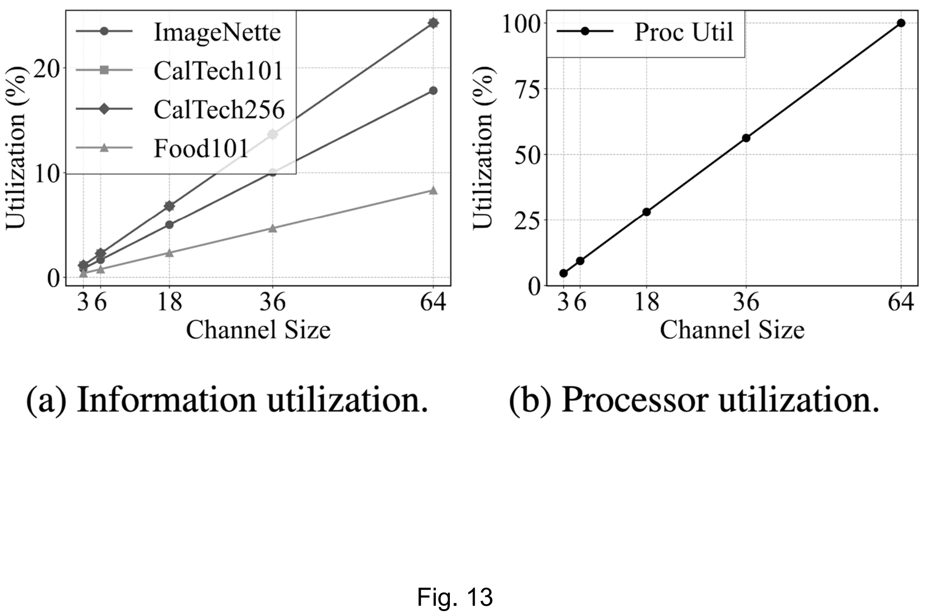

FIG. 13 is a schematic diagram comparing resource utilizations according to example embodiments with results of known ML optimization techniques, and in particular illustrates a resource usage (information utilization, processor utilization) according to example embodiments and known ML optimization techniques varying with the (used) channel size.

The utilization of the original image information depends on the size of the original data size, which grows linearly according to the channel size. A correlation between information utilization rate and accuracy improvement was found. For example, Caltech101 and Caltech256 had utilization rates of 24.3%, improving accuracy by 3.6%p and 2.9%p, respectively, while Food101 had an 8.3% utilization rate with a 2.4%p accuracy improvement. The processor utilization linearly increases until 100% with 64 channels size, which is the number of parallel processing units in the evaluated platforms.

The following table (Table 4) illustrates a comparison of data extension strategies.

| Method | InputChan | InfoRatio ($\times$) | Accuracy |
|---|---|---|---|
| Downsampling | 3 | 1.0 | 57.8 $\pm$ 1.2 |
| Repetition | 64 | 1.0 | 56.3 $\pm$ 0.8 |
| Rotation | 64 | 1.0 | 55.7 $\pm$ 0.6 |
| Tile per channel | 64 | 21.3 | 39.3 $\pm$ 0.9 |
| Patch-wise seq. | 64 | 21.3 | 60.4 $\pm$ 1.5 |
| **DEX** | 64 | 21.3 | **61.4 $\pm$ 0.6** |

To understand the effectiveness of the patch-wise even sampling and the channel-wise stacking according to example embodiments, example embodiments were compared with other possible data channel extension strategies, in particular with four strategies: repeating the same down-sampled image across the channels (Repetition), generating slightly different images through rotation (Rotation), dividing the original image into multiple tiles and stacking those tiles across channels (Tile), and patch-wise sequential sampling (Patch-wise seq.), which is a variation of principles of example embodiments, that involves sequential sampling within a patch instead of even sampling. In this experiment, SimpleNet was used and evaluated on ImageNette. Table 4 shows the results of such evaluation. Repetition does not improve accuracy over down-sampling, indicating that merely increasing the number of kernels does not lead to performance gains. Rotation shows a slight decrease in accuracy compared to Repetition, which suggests that slight changes through rotation do not enhance performance. Tile shows low accuracy, demonstrating the importance of having a complete view of the original image in each channel, rather than focusing on specific regions. Patch-wise sequential sampling shows lower accuracy than patch-wise even sampling of example embodiments, highlighting the importance of even sampling of example embodiments for better performance.

Example embodiments can be built with software solutions.

Example embodiments can be seamlessly integrated into a variety of AI-capable products, since these can be built with software solutions. Example embodiments can be implemented as AI framework in all operating systems (or firmware) that support tiny AI accelerators, especially those running on small wearable and IoT devices.

As neural network models advance and become more prevalent in industrial and consumer applications, they will inevitably face the challenge of providing satisfactory accuracy even on the resource-constrained devices. These challenges can significantly limit the usability of wearable and IoT devices.

Example embodiments advantageously improve runtime accuracy without increasing inference latency on such wearable and IoT devices and in general on tiny AI accelerators and thereby enable improvement of for example industrial automation and AI products.

The above-described procedures and functions may be implemented by respective functional elements, processors, or the like, as described below.

In the foregoing exemplary description of the network entity, only the units that are relevant for understanding the principles of the disclosure have been described using functional blocks. The network entity may comprise further units that are necessary for its respective operation. However, a description of these units is omitted in this specification. The arrangement of the functional blocks of the devices is not construed to limit the disclosure, and the functions may be performed by one block or further split into sub-blocks.

When in the foregoing description it is stated that the apparatus, i.e. network entity (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

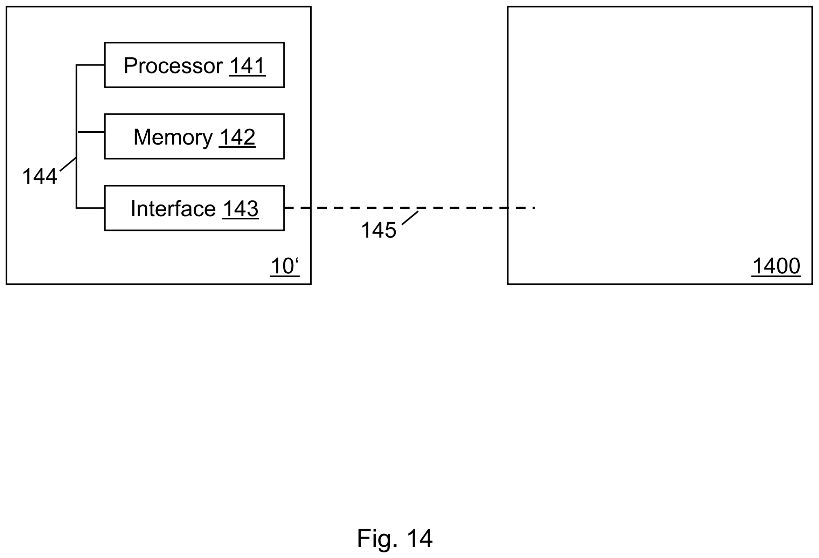

In FIG. 14, an alternative illustration of apparatuses according to example embodiments is depicted. As indicated in FIG. 14, according to example embodiments, the apparatus 10'/30' (corresponding to the apparatus 10/30) comprises a processor 141, a memory 142 and an interface 143, which are connected by a bus 144 or the like, and the apparatus 10'/30' may be connected to other apparatuses (e.g. exemplary apparatus 1400) via link 145.

The processor 141 and/or the interface 143 may also include a modem or the like to facilitate communication over a (hardwire or wireless) link, respectively. The interface 143 may include a suitable transceiver coupled to one or more antennas or communication means for (hardwire or wireless) communications with the linked or connected device(s), respectively. The interface 143 is generally configured to communicate with at least one other apparatus, i.e. the interface thereof.

The memory 142 may store respective programs assumed to include program instructions or computer program code that, when executed by the respective processor, enables the respective electronic device or apparatus to operate in accordance with the example embodiments.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to example embodiments, an apparatus representing the apparatus 10 (for preparing, based on initial data, input data for an input layer of a machine learning model having said input layer, at least one inner layer, and an output layer, and being learned and/or deployed at processing hardware providing a plurality of processing channels, each processing channel comprising a dedicated processor and a dedicated memory range, wherein said initial data is arranged in a first array having a first dimension equal to or larger than 1, a second dimension equal to or larger than 1, and a third dimension equal to or larger than 1, wherein a data amount of each element of said first array is equal to a predetermined amount) comprises at least one processor 141, at least one memory 142 including computer program code, and at least one interface 143 configured for communication with at least another apparatus. The processor (i.e. the at least one processor 141, with the at least one memory 142 and the computer program code) is configured to perform, if said predetermined amount multiplied with a size of said first dimension and a size of said second dimension exceeds a size of said dedicated memory range and if said third dimension is smaller than a number of said plurality of processing channels: partitioning said first array in said first dimension and said second dimension into a plurality of uniform sub-arrays, wherein a number of said plurality of sub-arrays is based on said dedicated memory range (thus the apparatus comprising corresponding means for partitioning), to perform performing, for each sub-array field index position of a plurality of selected sub-array field index positions, a down-sampling operation on said first array of said initial data, said down-sampling operation includes selecting, from each sub-array, a field at said sub-array field index position, and generating, for each index position in said third dimension, a second array including said elements corresponding to said selected fields and said index position in said third dimension, in an arrangement corresponding to an arrangement of said plurality of uniform sub-arrays (thus the apparatus comprising corresponding means for performing, means for selecting, and means for generating), and to perform assigning each of generated second arrays in order of generation to a respective processing channel of said plurality of processing channels as said input data (thus the apparatus comprising corresponding means for assigning).

According to example embodiments, an apparatus representing the apparatus 30 (for preparing, based on initial data, input data for an input layer of a machine learning model having said input layer, at least one inner layer, and an output layer, and being learned and/or deployed at processing hardware providing a plurality of processing channels, each processing channel comprising a dedicated processor and a dedicated memory range, wherein said initial data is arranged in a first array having a first dimension equal to or larger than 1, a second dimension equal to or larger than 1, and a third dimension equal to or larger than 1) comprises at least one processor 141, at least one memory 142 including computer program code, and at least one interface 143 configured for communication with at least another apparatus. The processor (i.e. the at least one processor 141, with the at least one memory 142 and the computer program code) is configured to perform, down-sampling, for each repetition of a plurality of repetitions, said initial data in said first dimension and said second dimension with a same sample rate among said plurality of repetitions and different sample offsets among said plurality of repetitions for each index position in said third dimension as second arrays (thus the apparatus comprising corresponding means for down-sampling), and to perform assigning each of said second arrays in order of said plurality of repetitions to a respective processing channel of said plurality of processing channels as said input data (thus the apparatus comprising corresponding means for assigning).

For further details regarding the operability/functionality of the individual apparatuses, reference is made to the above description in connection with any one of FIGs. 1 to 13, respectively.

For the purpose of the present disclosure as described herein above, it should be noted that

- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;

- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present disclosure. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present disclosure also covers any conceivable combination of method steps and operations described above, and any conceivable combination of nodes, apparatuses, modules or elements described above, as long as the above-described concepts of methodology and structural arrangement are applicable.

In view of the above, there are provided measures for efficient utilization of machine learning processing resources. Such measures exemplarily comprise, for preparing, based on initial data, input data for an input layer of a machine learning model having said input layer, at least one inner layer, and an output layer, and being learned and/or deployed at processing hardware providing a plurality of processing channels, each processing channel comprising a dedicated processor and a dedicated memory range, wherein said initial data is arranged in a first array having a first dimension equal to or larger than 1, a second dimension equal to or larger than 1, and a third dimension equal to or larger than 1, wherein a data amount of each element of said first array is equal to a predetermined amount, if said predetermined amount multiplied with a size of said first dimension and a size of said second dimension exceeds a size of said dedicated memory range and if said third dimension is smaller than a number of said plurality of processing channels: partitioning said first array in said first dimension and said second dimension into a plurality of uniform sub-arrays, wherein a number of said plurality of sub-arrays is based on said dedicated memory range, performing, for each sub-array field index position of a plurality of selected sub-array field index positions, a down-sampling operation on said first array of said initial data, said down-sampling operation includes selecting, from each sub-array, a field at said sub-array field index position, and generating, for each index position in said third dimension, a second array including said elements corresponding to said selected fields and said index position in said third dimension, in an arrangement corresponding to an arrangement of said plurality of uniform sub-arrays, and assigning each of generated second arrays in order of generation to a respective processing channel of said plurality of processing channels as said input data.

Even though the disclosure is described above with reference to the examples according to the accompanying drawings, it is to be understood that the disclosure is not restricted thereto. Rather, it is apparent to those skilled in the art that the present disclosure can be modified in many ways without departing from the scope of the inventive idea as disclosed herein.

List of acronyms and abbreviations

| | |
|---|---|
| AI | artificial intelligence |
| CNN | convolutional neural network |
| DEX | data channel extension |
| IoT | Internet of Things |
| MCU | microcontroller unit |
| ML | machine learning |
| RGB | red-green-blue |
| TinyML | tiny machine learning |

**Claims**

1. An apparatus for preparing, based on initial data, input data for an input layer of a machine learning model having said input layer, at least one inner layer, and an output layer, and being learned and/or deployed at processing hardware providing a plurality of processing channels, each processing channel comprising a dedicated processor and a dedicated memory range, wherein said initial data is arranged in a first array having a first dimension equal to or larger than 1, a second dimension equal to or larger than 1, and a third dimension equal to or larger than 1, wherein a data amount of each element of said first array is equal to a predetermined amount, the apparatus comprising

   at least one processor, and
   at least one memory storing instructions that, when executed by the at least one processor, cause the apparatus at least to perform:
   if said predetermined amount multiplied with a size of said first dimension and a size of said second dimension exceeds a size of said dedicated memory range and if said third dimension is smaller than a number of said plurality of processing channels:

   partitioning said first array in said first dimension and said second dimension into a plurality of uniform sub-arrays, wherein a number of said plurality of sub-arrays is based on said dedicated memory range,
   performing, for each sub-array field index position of a plurality of selected sub-array field index positions, a down-sampling operation on said first array of said initial data, said down-sampling operation includes:

   selecting, from each sub-array, a field at said sub-array field index position, and
   generating, for each index position in said third dimension, a second array including said elements corresponding to said selected fields and said index position in said third dimension, in an arrangement corresponding to an arrangement of said plurality of uniform sub-arrays, and

   assigning each of generated second arrays in order of generation to a respective processing channel of said plurality of processing channels as said input data.

2. The apparatus according to claim 1, wherein
   the instructions, when executed by the at least one processor, cause the apparatus at least to perform:
   feeding said input data to said input layer of said machine learning model based on a result of said assigning.

3. The apparatus according to claim 1 or 2, wherein
   the instructions, when executed by the at least one processor, cause the apparatus at least to perform:
   setting said plurality of selected sub-array field index positions based on said number of said plurality of processing channels and a size of said third dimension.

4. The apparatus according to claim 3, wherein
   in relation to said setting said plurality of selected sub-array field index positions, the instructions, when executed by the at least one processor, cause the apparatus at least to perform:
   setting a number of said plurality of selected sub-array field index positions as an integer resulting from ceiling said number of said plurality of processing channels divided by said third dimension of said first array.

**5.** The apparatus according to any of claims 1 to 4, wherein
in relation to said assigning, the instructions, when executed by the at least one processor, cause the apparatus at least to perform:
discarding surplus generated second arrays exceeding said number of said plurality of processing channels.

**6.** The apparatus according to any of claims 1 to 5, wherein
said initial data is image data, wherein said first dimension and said second dimension specify a resolution of said image data, and each index position in said third dimension corresponds to a color component.

**7.** The apparatus according to claim 6, wherein

said third dimension has a size of 3, wherein a first index position in said third dimension corresponds to a red color component, a second index position in said third dimension corresponds to a green color component, and a third index position in said third dimension corresponds to a blue color component, or
said third dimension has a size of 1, wherein a first index position in said third dimension corresponds to a black color component.

**8.** The apparatus according to any of claims 1 to 7, wherein
the instructions, when executed by the at least one processor, cause the apparatus at least to perform:

setting said number of said plurality of sub-arrays as an integer equal to or smaller than said size of said dedicated memory range divided by said predetermined amount, and/or
setting said number of said plurality of sub-arrays based on a nominal two-dimensional array resolution per channel of said input data.

**9.** An apparatus for preparing, based on initial data, input data for an input layer of a machine learning model having said input layer, at least one inner layer, and an output layer, and being learned and/or deployed at processing hardware providing a plurality of processing channels, each processing channel comprising a dedicated processor and a dedicated memory range, wherein said initial data is arranged in a first array having a first dimension equal to or larger than 1, a second dimension equal to or larger than 1, and a third dimension equal to or larger than 1, the apparatus comprising

at least one processor, and
at least one memory storing instructions that, when executed by the at least one processor, cause the apparatus at least to perform:

for each repetition of a plurality of repetitions:
down-sampling said initial data in said first dimension and said second dimension with a same sample rate among said plurality of repetitions and different sample offsets among said plurality of repetitions for each index position in said third dimension as second arrays, and
assigning each of said second arrays in order of said plurality of repetitions to a respective processing channel of said plurality of processing channels as said input data.

**10.** A method for preparing, based on initial data, input data for an input layer of a machine learning model having said input layer, at least one inner layer, and an output layer, and being learned and/or deployed at processing hardware providing a plurality of processing channels, each processing channel comprising a dedicated processor and a dedicated memory range, wherein said initial data is arranged in a first array having a first dimension equal to or larger than 1, a second dimension equal to or larger than 1, and a third dimension equal to or larger than 1, wherein a data amount of each element of said first array is equal to a predetermined amount, the method comprising
if said predetermined amount multiplied with a size of said first dimension and a size of said second dimension exceeds a size of said dedicated memory range and if said third dimension is smaller than a number of said plurality of processing channels:

partitioning said first array in said first dimension and said second dimension into a plurality of uniform sub-arrays, wherein a number of said plurality of sub-arrays is based on said dedicated memory range,
performing, for each sub-array field index position of a plurality of selected sub-array field index positions, a down-sampling operation on said first array of said initial data, said down-sampling operation includes:

selecting, from each sub-array, a field at said sub-array field index position, and
generating, for each index position in said third dimension, a second array including said elements corresponding to said selected fields and said index position in said third dimension, in an arrangement corresponding to an arrangement of said plurality of uniform sub-arrays, and

assigning each of generated second arrays in order of generation to a respective processing channel of said plurality of processing channels as said input data.

11. The method according to claim 10, further comprising
feeding said input data to said input layer of said machine learning model based on a result of said assigning.

12. The method according to claim 10 or 11, further comprising
setting said plurality of selected sub-array field index positions based on said number of said plurality of processing channels and a size of said third dimension.

13. The method according to claim 12, further comprising
in relation to said setting said plurality of selected sub-array field index positions:
setting a number of said plurality of selected sub-array field index positions as an integer resulting from ceiling said number of said plurality of processing channels divided by said third dimension of said first array.

14. The method according to any of claims 10 to 13, further comprising in relation to said assigning:
discarding surplus generated second arrays exceeding said number of said plurality of processing channels.

15. The method according to any of claims 10 to 14, wherein
said initial data is image data, wherein said first dimension and said second dimension specify a resolution of said image data, and each index position in said third dimension corresponds to a color component.

16. The method according to claim 15, wherein

said third dimension has a size of 3, wherein a first index position in said third dimension corresponds to a red color component, a second index position in said third dimension corresponds to a green color component, and a third index position in said third dimension corresponds to a blue color component, or
said third dimension has a size of 1, wherein a first index position in said third dimension corresponds to a black color component.

17. The method according to any of claims 10 to 16, further comprising

setting said number of said plurality of sub-arrays as an integer equal to or smaller than said size of said dedicated memory range divided by said predetermined amount, and/or
setting said number of said plurality of sub-arrays based on a nominal two-dimensional array resolution per channel of said input data.

18. A method for preparing, based on initial data, input data for an input layer of a machine learning model having said input layer, at least one inner layer, and an output layer, and being learned and/or deployed at processing hardware providing a plurality of processing channels, each processing channel comprising a dedicated processor and a dedicated memory range, wherein said initial data is arranged in a first array having a first dimension equal to or larger than 1, a second dimension equal to or larger than 1, and a third dimension equal to or larger than 1, the method comprising

for each repetition of a plurality of repetitions:
down-sampling said initial data in said first dimension and said second dimension with a same sample rate among said plurality of repetitions and different sample offsets among said plurality of repetitions for each index position in said third dimension as second arrays, and
assigning each of said second arrays in order of said plurality of repetitions to a respective processing channel of said plurality of processing channels as said input data.

19. An apparatus for preparing, based on initial data, input data for an input layer of a machine learning model having said input layer, at least one inner layer, and an output layer, and being learned and/or deployed at processing hardware providing a plurality of processing channels, each processing channel comprising a dedicated processor and a dedicated memory range, wherein said initial data is arranged in a first array having a first dimension equal to or larger than 1, a second dimension equal to or larger than 1, and a third dimension equal to or larger than 1, wherein a data amount of each element of said first array is equal to a predetermined amount, the apparatus comprising

partitioning means for, if said predetermined amount multiplied with a size of said first dimension and a size of said second dimension exceeds a size of said dedicated memory range and if said third dimension is smaller than a number of said plurality of processing channels, partitioning said first array in said first dimension and said second dimension into a plurality of uniform sub-arrays, wherein a number of said plurality of sub-arrays is based on said dedicated memory range,

performing means for, if said predetermined amount multiplied with a size of said first dimension and a size of said second dimension exceeds a size of said dedicated memory range and if said third dimension is smaller than a number of said plurality of processing channels, performing, for each sub-array field index position of a plurality of selected sub-array field index positions, a down-sampling operation on said first array of said initial data, said down-sampling operation includes:

selecting, from each sub-array, a field at said sub-array field index position, and

generating, for each index position in said third dimension, a second array including said elements corresponding to said selected fields and said index position in said third dimension, in an arrangement corresponding to an arrangement of said plurality of uniform sub-arrays, and

assigning means for, if said predetermined amount multiplied with a size of said first dimension and a size of said second dimension exceeds a size of said dedicated memory range and if said third dimension is smaller than a number of said plurality of processing channels, assigning each of generated second arrays in order of generation to a respective processing channel of said plurality of processing channels as said input data.

20. An apparatus for preparing, based on initial data, input data for an input layer of a machine learning model having said input layer, at least one inner layer, and an output layer, and being learned and/or deployed at processing hardware providing a plurality of processing channels, each processing channel comprising a dedicated processor and a dedicated memory range, wherein said initial data is arranged in a first array having a first dimension equal to or larger than 1, a second dimension equal to or larger than 1, and a third dimension equal to or larger than 1, the apparatus comprising

down-sampling means for, for each repetition of a plurality of repetitions, down-sampling said initial data in said first dimension and said second dimension with a same sample rate among said plurality of repetitions and different sample offsets among said plurality of repetitions for each index position in said third dimension as second arrays, and

assigning each of said second arrays in order of said plurality of repetitions to a respective processing channel of said plurality of processing channels as said input data.

EP 4 756 675 A1

Fig. 1

Fig. 2

Fig. 3

EP 4 756 675 A1

Fig. 4

```
                                                                    ┌─ S51
┌────────────────────────────────────────────────────────────────┐
│ partitioning a first array in a first dimension and a second     │
│ dimension into a plurality of uniform sub-arrays, wherein a      │
│ number of said plurality of sub-arrays is based on a             │
│ dedicated memory range                                           │
└────────────────────────────────────────────────────────────────┘
                                                                    ┌─ S52
┌────────────────────────────────────────────────────────────────┐
│ performing, for each sub-array field index position of a         │
│ plurality of selected sub-array field index positions, a         │
│ down-sampling operation on said first array of said initial data:│
│                                                            ┌─ S53 │
│  ┌───────────────────────────────────────────────────────┐      │
│  │ selecting, from each sub-array, a field at a sub-array │      │
│  │ field index position                                  │      │
│  └───────────────────────────────────────────────────────┘      │
│                                                            ┌─ S54 │
│  ┌───────────────────────────────────────────────────────┐      │
│  │ generating, for each index position in said third      │      │
│  │ dimension, a second array including said elements      │      │
│  │ corresponding to said selected fields and said index   │      │
│  │ position in said third dimension, in an arrangement    │      │
│  │ corresponding to an arrangement of said plurality of   │      │
│  │ uniform sub-arrays                                     │      │
│  └───────────────────────────────────────────────────────┘      │
└────────────────────────────────────────────────────────────────┘
                                                                    ┌─ S55
┌────────────────────────────────────────────────────────────────┐
│ assigning each of generated second arrays in order of generation │
│ to a respective processing channel of said plurality of          │
│ processing channels as said input data                           │
└────────────────────────────────────────────────────────────────┘
```

Fig. 5

EP 4 756 675 A1

S61

down-sampling, for each repetition of a plurality of repetitions, initial data in a first dimension and a second dimension with a same sample rate among a plurality of repetitions and different sample offsets among said plurality of repetitions for each index position in a third dimension as second arrays

S62

assigning each of said second arrays in order of said plurality of repetitions to a respective processing channel of a plurality of processing channels as input data

Fig. 6

Pooling Engine

Caching

Conv Engine

64 Parallel
Processors

Data memory
(512KB)

Weight memory
(432KB)

Fig. 7

EP 4 756 675 A1

Fig. 8

EP 4 756 675 A1

(a) Original image $I$

$W_I$

$H_I$

$C_I$

*exceeds data memory limit

(b) Downsampling

$W_O$

$H_O$

$C_I$

R
G
B

Processors    Data memory

$Pr_1$
$Pr_2$
$Pr_3$
$Pr_4$
$Pr_5$
$Pr_6$
$Pr_N$

Idle

(c) DEX

$W_O$

Different samples

$H_O$

$C_O$

Processors    Data memory

$Pr_1$
$Pr_2$
$Pr_3$
$Pr_4$
$Pr_5$
$Pr_6$
$Pr_N$

Fig. 9

EP 4 756 675 A1

Original image $I$

Patch-wise even sampling (e.g., $K = 4$)

Channel-wise stacking (e.g., $C_O = 12$)

Output image $O$

$W_I$

$P_{00}$ $P_{01}$ $P_{02}$ $P_{03}$

$P_{10}$

$H_I$

$W_{P_{ij}}$

$H_{P_{ij}}$

Patch $P_{ij}$

$C_I$

$P_{ij}$

$k = 0$

$k = 1$

$k = 2$

$k = 3$

$\left\lfloor \dfrac{l_k}{W_{P_{ij}}} \right\rfloor, \; l_k \bmod W_{P_{ij}}$

$O_{ij}$

$W_O$

$H_O$ $O_{ij}$ $C_O$

Fig. 10

Fig. 11

Fig. 12

(a) Information utilization.     (b) Processor utilization.

Fig. 13

EP 4 756 675 A1

Fig. 14

# EUROPEAN SEARCH REPORT

**Application Number**

EP 25 21 9640

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Gong Taesik ET AL: "DEX: Data Channel Extension for Efficient CNN Inference on Tiny AI Accelerators", <br> , <br> 6 November 2024 (2024-11-06), XP093380426, <br> Retrieved from the Internet: <br> URL:https://openreview.net/pdf?id=ftqjwZQz 10 <br> [retrieved on 2026-03-23] <br> * the whole document * <br> & Anonymous: "OpenReview for: DEX: Data Channel Extension for Efficient CNN Inference on Tiny AI Accelerators", <br> , <br> 6 November 2024 (2024-11-06), XP093380410, <br> Retrieved from the Internet: <br> URL:https://openreview.net/forum?id=ftqjwZ Qz10&referrer=%5Bthe%20profile%20of%20Taes ik%20Gong%5D(%2Fprofile%3Fid%3D~Taesik_Gon g1) <br> [retrieved on 2026-03-23] <br> * the whole document * <br> & Anonymous: "Screenshot of OpenReview for DEX: Data Channel Extension for Efficient CNN Inference on Tiny AI Accelerators", <br> , <br> 24 March 2026 (2026-03-24), XP093380961, <br> Retrieved from the Internet: <br> URL:https://openreview.net/forum?id=ftqjwZ Qz10&referrer=%5Bthe%20profile%20of%20Taes ik%20Gong%5D(%2Fprofile%3Fid%3D~Taesik_Gon g1) <br> [retrieved on 2026-03-24] <br> * the whole document * <br> ----- | 1-20 | INV. <br> G06N3/0464 <br> G06N3/063 <br><br><br><br><br><br> TECHNICAL FIELDS SEARCHED (IPC) <br><br> G06N |

The present search report has been drawn up for all claims

| Place of search | Date of completion of the search | Examiner |
|---|---|---|
| The Hague | 24 March 2026 | Ntarlagiannis, V |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document